Europäisches Patentamt

European Patent Office

Office européen des brevets

(19)

(11) Veröffentlichungsnummer : **0 075 842**
**B1**

(12) **EUROPÄISCHE PATENTSCHRIFT**

(45) Veröffentlichungstag der Patentschrift :
20.08.86

(51) Int. Cl.⁴ : **H 01 M 2/12**

(21) Anmeldenummer : **82108727.7**

(22) Anmeldetag : **21.09.82**

(54) **Vorrichtung zum Verschliessen eines Akkumulatorgefässes.**

(30) Priorität : 25.09.81 SE 8105692

(43) Veröffentlichungstag der Anmeldung :
06.04.83 Patentblatt 83/14

(45) Bekanntmachung des Hinweises auf die Patenterteilung : 20.08.86 Patentblatt 86/34

(84) Benannte Vertragsstaaten :
AT DE FR

(56) Entgegenhaltungen :
DE-A- 2 115 932
DE-A- 2 236 324
DE-A- 2 900 850
FR-A- 1 036 609
FR-A- 1 089 972
FR-A- 2 123 201
FR-A- 2 223 256
US-A- 3 287 173

(73) Patentinhaber : NORDISKA ACKUMULATORFABRI-
KER
Kommendörsgatan 16
S-102 46 Stockholm 5 (SE)

(72) Erfinder : Sköld, Ulf
Katebo
S-577 02 Silverdalen (SE)

(74) Vertreter : Kaiser, Dieter Ralf, Dipl.-Ing.
Gundelhardtstrasse 72
D-6233 Kelkheim/Ts. (DE)

EP 0 075 842 B1

**Beschreibung**

Die Erfindung bezieht sich auf eine Vorrichtung zum Verschließen eines Akkumulatorgefäßes, das mindestens eine in einem Gefäßdeckel ausgebildete Öffnung aufweist, mit Hilfe von einem für jede Öffnung vorgesehenen Verschlußzapfen, der in einer die Öffnung umgebenden hülsenähnlichen Fassung zurückgehalten wird, und die einen Entgasungskanal zur Außenatmosphäre besitzt.

Vorrichtungen dieser Art gehören zum Stande der Technik. Ein Nachteil derselben besteht darin, daß jeder Verschlußzapfen üblicherweise mit einem Außengewinde ausgeführt ist. Bei der Montage des Akkumulatorenbatterie entstehen Schwierigkeiten, die Verschlußzapfen auf dem Deckel des Akkumulatorgefäßes zu positionieren, was bedeutet, daß der Verschlußzapfen zum zurückhaltenden Festsitzen an einem entsprechenden Gewinde im Gefäßdeckel von Hand gedreht werden muß. Wenn man den Vorgang, durch welchen die Verschlußzapfen in den Öffnungen des Gefäßdeckels festgeschraubt werden, automatisieren will, entstehen Schwierigkeiten u. a. dadurch, daß der Vorgang ziemlich viel Zeit erfordert. Der Zweck der Erfindung ist, eine Vorrichtung der oben angegebenen Art zu schaffen, die es erlaubt, durch Maßnahmen, die einem automatischen Betrieb besser zugänglich sind als die bisher angewandten, die Verschlußzapfen schneller als bisher in die Öffnungen des Batteriegefäßdeckels einzubringen.

Eine Vorrichtung der eingangs angegebenen Art ist daher aufgrund des oben Angeführten erfindungsgemäß dadurch gekennzeichnet, daß der Verschlußzapfen von außen lösbar und erneut anbringbar ist und einen im wesentlichen hülsenförmigen äußeren Zapfenteil und einen in diesen axial einzuschiebenden inneren Zapfenteil umfaßt, wobei der äußere Zapfenteil einen in die hülsenähnliche Fassung aufzunehmende, radial expandierbaren Abschnitt aufweist und der innere Zapfenteil ein Ausdehnungsorgan bildet, das bei dessen axialer Einschiebung in den äußeren Zapfenteil den genannten Abschnitt von einem radial verengten Zustand, in welchem er in der dazugehörenden hülsenähnlichen Fassung axial verschiebbar ist, zu einem radial erweiterten Zustand, in welchem der äußere Zapfenteil durch Eingriff zwischen dem genannten Abschnitt und der radial nach innen weisenden Seite der hülsenähnlichen Fassung in dieser festgehalten wird, ausdehnt.

Erfindungsgemäß kann der äußere Zapfenteil und vorzugsweise auch der innere Zapfenteil aus einem federnden Material bestehen.

Als solches kommen Kunststoffe, vorzugsweise thermoplastische Kunststoffe, z. B. Polyolefine, insbesondere Polypropylen, in Betracht, aber auch die Verwendung anderer ähnlicher Stoffe kann aktuell werden. Hierdurch bieten sich verbesserte Möglichkeiten. die Verschlußzapfen abzunehmen und erneut anzubringen.

Erfindungsgemäß kann weiterhin die Fassung auf ihrer radial nach innen weisenden Seite und/oder der äußere Zapfenteil auf der radial nach außen weisenden Seite des radial expandierbaren Abschnitts das Festhalten des äußeren Zapfenteils in der Fassung fördernde Eingriffsorgane, wie Vorsprünge, Kämme oder dgl. aufweisen. Durch diese Anordnung erreicht man eine zuverlässigere Zurückhaltung der Verschlußzapfen in der dazugehörenden Fassung. Ein weiterer Vorteil ist darin zu sehen, daß die erfindungsgemäße Vorrichtung für Akkumulatorgefäße vom konventionellen Typ mit Gewinde in den Deckelöffnungen verwendet werden kann. Es wird somit für einen Akkumulatorhersteller nicht notwendig, ein neues Werkzeug für das Spritzgießen zu schaffen, wenn er einen erfindungsgemäßen Verschlußzapfen verwendet. Eine zuverlässige Zurückhaltung der Verschlusszapfen in der dazugehörenden Fassung ist besonders erwünscht, wenn es sich um wartungsfreie Batterien handelt, d. h. Batterien, bei welchen eine ergänzende Einfüllung von Wasser überhaupt nicht oder in wesentlich geringerem Umfang als vorher erforderlich ist.

Erfindungsgemäss kann der äussere Zapfenteil einen im Verhältnis zu dessen in die Fassung aufzunehmenden Abschnitt radial erweiterten Kopf aufweisen, der an der Oberseite des Gefässdeckels anliegt. Ein Vorteil dieser Anordnung ist, dass sie eine einfache Lokalisierung des äusseren Zapfenteils axial in der hülsenähnlichen Fassung ermöglicht.

Erfindungsgemäss kann der expandierbare Abschnitt des äusseren Zapfenteils mit einem oder mehreren, im wesentlichen in Axialrichtung desselben verlaufenden und von dem Innenende des Zapfenteils ausgehenden Schlitzen versehen sein. Der Vorteil dieser Anordnung ist, dass sie unter Aufwendung verhältnismässig geringer axialer Kräfte seitens des inneren Zapfenteils die günstigste Ausdehnung ergibt.

Erfindungsgemäss ist eine geeignete Vorrichtung durch einen zwischen den äusseren und inneren Zapfenteilen wirkenden Schnappverband zur lösbaren Befestigung des inneren Zapfenteils in Axiallage gegenüber dem äusseren Zapfenteil gekennzeichnet. Der Schnappverband hat vorzugsweise die Form eines auf der Aussenseite des inneren Zapfenteils angeordneten Ringwulstes, der in eine Ringnut auf der Innenseite des expandierenden Abschnitts des äusseren Zapfenteils oder eine axiale Nut in einem Ringwulst desselben verlegt wird.

Der Vorteil dieser Einrichtung ist, dass sie eine vorteilhafte Zurückhaltung des inneren Zapfenteils in dem äusseren Zapfenteil ergibt.

Erfindungsgemäss kann der innere Zapfenteil einen in den radial expandierbaren Abschnitt des äusseren Zapfenteils aufzunehmenden, vorzugsweise als eine axial geschlitzte Hülse ausgebildeten Schaftteil und einen daran angeschlossenen, radial erweiterten Kopf aufweisen. Diese Anordnung ermöglicht Materialersparnisse und erlaubt bei der Herstellung relativ grosse Toleranzen.

Erfindungsgemäss kann eine Vorrichtung laut Obigem eine im Grenzbereich zwischen dem äusseren Zapfenteil und dem Kopf des inneren Zapfenteils vorgesehene Ausnehmung zur Aufnahme eines Werkzeuges zum Herausnehmen des inneren Zapfenteils gegen den Widerstand des Schnappverbandes aufweisen. Diese Einrichtung gestattet ein einfaches Entfernen des inneren Zapfenteils, z. B. mittels eines Schraubenziehers od. dgl., und damit auch des äusseren Zapfenteils. Auch wenn die Vorrichtung im Rahmen ihrer vielseitigen Einsetzbarkeit vorzugsweise zur Verwendung bei sog. wartungsfreien Akkumulatorenbatterien bestimmt ist, muss man damit rechnen, dass die Batterien eine gewisse Pflege erfordern, wobei das Entfernen der Verschlusszapfen zur Kontrolle des Elektrolytpegels und des sonstigen Zustandes erwünscht ist.

Die Erfindung wird im folgenden unter Hinweis auf die beigefügte Zeichnung näher beschrieben, wobei

Figur 1 eine Vorrichtung zum Verschliessen einer Öffnung im Akkumulatorgefässdeckel mit Hilfe eines Verschlusszapfens zeigt, in der die Anordnung des Verschlusszapfens dem Schließzustand entspricht, und

Figur 2 dieselbe Vorrichtung wie in Fig. 1 mit dem Verschlusszapfen in nicht schliessender Lage zeigt.

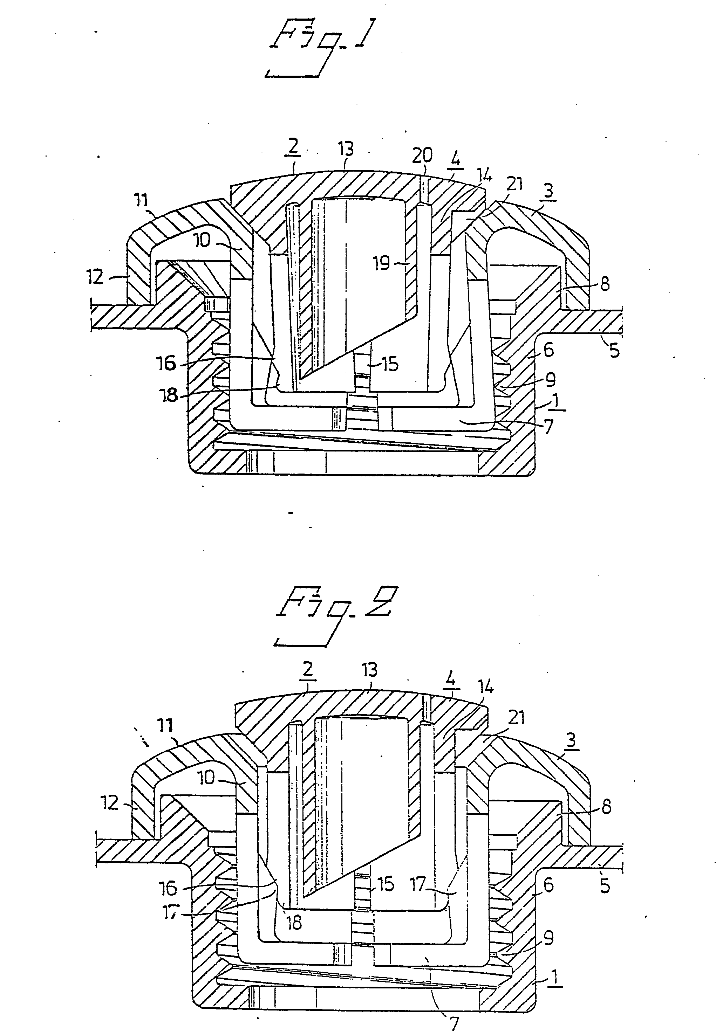

Unter Hinweis auf Fig. 1 bezeichnet 1 eine hülsenähnliche Fassung, die einen für jede Öffnung im Deckel eines beliebigen Akkumulatorgefässes vorgesehenen Verschlusszapfen 2 umgibt. Der Verschlusszapfen 2 umfasst einen im wesentlichen hülsenförmigen äusseren Zapfenteil 3 und einen in diesen axial einzuschiebenden inneren Zapfenteil 4. Die hülsenähnliche Fassung 1 ist mit dem Batteriegefässdeckel 5 einstückig ausgeführt und umfasst einen rohrförmigen Teil 6, der in den Innenraum des Batteriegefässes hineinragt und mit einer Endwand 7 abgeschlossen ist, in welche eine Öffnung zu dem Inneren der hülsenähnlichen Fassung 1 aufgenommen ist. Oben weist letztere einen ringförmigen Verstärkungskamm 8 mit nach innen schräg geschnittener Oberfläche auf. Der rohrförmige Teil 6 ist auf der Innenseite mit einem Gewinde 9 in Form eines schraubengedrehten Kammes mit scharfem, etwas abgeschrägtem Rücken versehen.

Der äussere Zapfenteil 3 umfasst einen etwa hülsenähnlichen, in den rohrförmigen Teil 6 der hülsenähnlichen Fassung 1 einzuschiebenden Schaftteil 10 sowie einen Flanschabschnitt 11, der von dem oberen Ende des rohrförmigen Teils 6 radial hinausragt und schräg nach unten geneigt ist und am Ende zu einem axialen Rand 12 gebogen und davon abgeschlossen wird, welcher axiale Rand sich parallel zu dem rohrförmigen Teil erstreckt. Hierbei ist der axial verlaufende Rand 12 derart ausgebildet, dass er in der Lage, in welcher der äussere Zapfenteil 3 in die hülsenähnliche Fassung 1 eingeführt ist, den Verstärkungskamm 8 umschliesst, wobei der Batteriedeckel 5 bei der Einführung des äusseren Zapfenteils 3 in den rohrförmigen Teil 6 einen Anschlag für den axialen Rand 12 bildet. Der rohrförmige Schaftteil 10 des äusseren Zapfenteils 3 sowie die Endwand 7 sind mit vier längsgehenden bzw. radialen Schlitzen versehen, durch welche der rohrförmige Teil 10 zu einer Lage, in welche der rohrförmige Teil 6 mit den Kämmen des Gewindes 9 eingreift, radial expandierbar wird.

Der innere Zapfenteil 4 umfasst einen Kopf 13 und einen daran einstückig angeschlossenen Schaftteil 14, der die Form einer unten offenen, mit Schlitzen 15 versehenen Hülse hat. Der Schaftteil 14 weist auf seiner Aussenseite einen Ringwulst 16 auf, der dazu bestimmt ist, sich in einer Lage innerhalb eines zweiten Ringwulstes 17 auf der Innenseite des rohrförmigen Schaftteils 10 zu befinden, wenn der innere Zapfenteil 4 in einer vorgesehenen Axiallage eingeführt ist. Indem hiermit der innere Zapfenteil (4) zur Ausdehnung des expandierbaren Abschnitts des äußeren Zapfenteils (3) mit seinem axial äußeren Ende lediglich auf einen axial inneren und einen reduzierten Innendurchmesser aufweisenden Bereich des gesamten Abschnitts einwirkt, wird ein zwischen dem äußeren Zapfenteil 3 und dem inneren Zapfenteil 4 wirkender Schnappverband zur lösbaren Festhaltung des inneren Zapfenteils 4 bei koaxialer Lage zu dem äußeren Zapfenteil 3 geschaffen, in welcher der Verschlußzapfen 2 die Öffnung des Gefäßdeckels 5 schließt. Hierbei ruht der Kopf 13 des Zapfenteils 4 mit einer schräggeschnittenen Oberfläche auf der Unterseite eines dazugehörenden Sitzes in dem radialen Flanschabschnitt 11 des äußeren Zapfenteils 3 — eine Lage, die aus Fig. 1 näher hervorgeht.

Fig. 2 zeigt eine Lage, in welcher der innere Zapfenteil 4 aus der in der Fig. 1 gezeigten Lage durch Aufhebung des Schnappeingriffs mit dem äußeren Zapfenteil 3 axial verschoben worden ist. Damit der innere Zapfenteil 4 nach wie vor in dem äußeren Zapfenteil 3 festgehalten wird, weist derselbe am Ende des Schaftteils 14 noch einen Ringwulst 18 auf, der sich in der gezeigten Lage innerhalb des Ringwulstes 17 befindet. Durch eine leichte mechanische Betätigung des Kopfes 13 mit den Fingern kann der innere Zapfenteil 4 aus dem Eingriff mit dem äußeren Zapfenteil 3 leicht hinausgeschnappt werden.

Die gezeigte Vorrichtung ist sehr vorteilhaft, indem sie es ermöglicht, Akkumulatorenbatterien einfach und schnell zu montieren. Man kann hierbei entweder so verfahren, daß der innere Zapfenteil 4 von dem äußeren Zapfenteil 3 getrennt ist oder daß der innere Zapfenteil 4 durch einen zwischen dem Ringwulst 18 und dem Ringwulst 17 wirksamen Schnappverband in dem äußeren Zapfenteil abnehmbar befestigt ist.

Gemäß der ersten Alternative wird der äußere Zapfenteil 3 in die dazugehörende Öffnung des Batteriedeckels 5 geführt, bis der axiale Rand 12 mit seiner Endfläche an der Oberfläche des Batteriedeckels 5 anliegt. Dann wird der innere Zapfenteil 4 in den Innenraum des äusseren Zapfenteils eingeführt. Durch die durch die Schlitze 15 in dem inneren Zapfenteil 4 bedingte Federung und die durch die Schlitze in dem äusseren Zapfenteil 3 bedingte Ausdehnbarkeit bringt der innere Zapfenteil 4 mit seinem Ringwulst 16 die durch die Schlitze in dem äusseren Zapfenteil 3 gebildeten expandierbaren Schaftteile unter Federung zu radialer Ausdehnung durch Eingriff mit dem Ringwulst 17, so dass die genannten Schaftteile mit ihrer glatten Aussenseite ihrerseits mit dem Gewinde 9 in den rohrförmigen Teil 6 der hülsenähnlichen Fassung 1 eingreifen, und auf diese Weise ein festgefügter Verband zwischen der Fassung 1 und den beiden Zapfenteilen 3 und 4 entsteht.

Gemäss der zweiten Alternative führt man zuerst den inneren Zapfenteil 4 in den äusseren Zapfenteil 3 ein, aber nur so weit, dass der Endringwulst 18 des inneren Zapfenteils an dem Ringwulst 17 des äusseren Zapfenteils 3 vorbeigeht. Dann wird der ganze aus den Zapfenteilen 3 und 4 zusammengesetzte Körper so weit in die Öffnung, die von der hülsenähnlichen Fassung 1 umgeben wird, hineingeführt, bis der axiale Rand 12 auf der Oberseite des Batteriedeckels 5 aufsitzt.

Darauf kann durch Druckbeanspruchung auf den Kopf 13 des inneren Zapfenteils 4 dieser Kopf zum Sitz auf dem radialen Flanschabschnitt 11 des äusseren Zapfenteils 3 geführt werden, so dass der Ringwulst 16 seinerseits zur Herstellung des gewünschten Schnappverbandes zwischen dem äusseren Zapfenteil 3 und dem inneren Zapfenteil 4 an dem Ringwulst 17 vorbeigeht, während gleichzeitig der in dem äusseren Zapfenteil 3 durch das Schlitzen expandierbar gemachte rohrförmige Schaftteil 10 zum festen Eingriff mit dem Gewinde 9 ausgedehnt wird.

Der innere Zapfenteil 4 weist weiterhin eine von dem Kopf 13 nach unten hinausragende, als Schirm ausgebildete zylinderförmige Wand 19 auf, wobei der Zylinder einen geringeren Durchmesser als der Schaftteil 14 hat, so dass ein ringförmiger Spalt zwischen der Innenseite des Schaftteils 14 und der Aussenseite der zylinderförmigen Wand 19 entsteht. Die zylinderförmige Wand 19 ist, wie aus der Zeichnung ersichtlich, unten schräg abgeschnitten. Der ringförmige Spalt steht durch eine Auslassöffnung 20 im Kopf 13 mit der Aussenatmosphäre in Verbindung. Durch die zylinderförmige Wand 19 entsteht eine Falle für Elektrolyttropfen, welche die bei der Ladung der Batterie gebildeten Gase mit sich führen können. Die Gase verlassen das Innere der zylindrischen Wand an der Stelle, wo sie den geringsten Strömungswiderstand bietet, d. h. dort, wo sie abgeschnitten ist, und gelangen über den Ringspalt und die Auslassöffnung 20 aus dem Verschlusszapfen nach draußen. Abgeschiedene Tropfen von Elektrolyt werden in dem Inneren der zylindrischen Wand 19 gesammelt und fliessen an der Stelle der zylindrischen Wand, welche die grösste Länge hat, in den Zapfen zurück.

Die Vorrichtung weist auch eine im Grenzbereich zwischen dem äusseren Zapfenteil 3 und dem Kopf des inneren Zapfenteils 4 vorgesehene Ausnehmung 21 zur Aufnahme eines in der Spitze platt gedrückten Werkzeuges, z. B. eines Schraubenziehers, zum Herausnehmen des inneren Zapfenteils 4 gegen den Widerstand des oben beschriebenen Schnappverbandes auf. Die Ausnehmung ermöglicht das Entfernen des Verschlusszapfens 2 aus dem Gefässdeckel zur Kontrolle des Elektrolytpegels der Batterie oder für eine Probenentnahme zur Kontrolle der Zusammensetzung des Elektrolyts.

**Patentansprüche**

1. Vorrichtung zum Verschließen eines Akkumulatorgefäßes, das mindestens eine in einem Gefäßdeckel (5) ausgebildete Öffnung aufweist, mit Hilfe von einem für jede Öffnung vorgesehenen Verschlußzapfen (2), der in einer die Öffnung umgebenden hülsenähnlichen Fassung (1) zurückgehalten wird, und die einen Entgasungskanal zur Außenatmosphäre besitzt, dadurch gekennzeichnet, daß der Verschlußzapfen (2) von außen lösbar und erneut anbringbar ist und einen im wesentlichen hülsenförmigen äußeren Zapfenteil (3) und einen in diesen axial einzuschiebenden inneren Zapfenteil (4) umfaßt, wobei der äußere Zapfenteil (3) einen in die hülsenähnliche Fassung (1) aufzunehmende, radial expandierbaren Abschnitt aufweist und der innere Zapfenteil (4) ein Ausdehnungsorgan bildet, das bei dessen axialer Einschiebung in den äußeren Zapfenteil (3) den genannten Abschnitt von einem radial verengten Zustand, in welchem er in der dazugehörenden hülsenähnlichen Fassung (1) axial verschiebbar ist, zu einem radial erweiterten Zustand, in welchem der äußere Zapfenteil (3) durch Eingriff zwischen dem genannten Abschnitt und der radial nach innen weisenden Seite der hülsenähnlichen Fassung (1) in dieser festgehalten wird, ausdehnt.

2. Vorrichtung nach Anspruch 1, dadurch gekennzeichnet, daß der äußere Zapfenteil (3) und der innere Zapfenteil (4) aus einem federnden Material bestehen.

3. Vorrichtung nach Anspruch 1 oder 2, dadurch gekennzeichnet, daß die hülsenähnliche Fassung (1) auf ihrer radial nach innen weisenden Seite und/oder der äußere Zapfenteil (3) auf der radial nach außen weisenden Seite des genannten Abschnitts eine Zurückhaltung des äußeren Zapfenteils in der Fassung (1) fördernde Eingriffsorgane (9) wie Vorsprünge, Kämme od. dgl. aufweist.

4. Vorrichtung nach einem der Ansprüche 1 bis 3, dadurch gekennzeichnet, daß der äußere Zapfenteil (3) einen im Verhältnis zu dessen in die hülsenähnliche Fassung (1) aufzunehmenden Abschnitt radial erweiterten Kopf (11, 12) aufweist, der an der Oberseite des Gefäßdeckels (5) anliegt.

5. Vorrichtung nach einem der Ansprüche 1 bis 4, dadurch gekennzeichnet, daß der expandierbare Abschnitt des äußeren Zapfenteils (3) mit einem oder mehreren, im wesentlichen in Axialrichtung derselben verlaufenden und von dem Innenende des Zapfenteils ausgehenden Schlitzen versehen ist.

6. Vorrichtung nach einem der Ansprüche 1 bis 5, dadurch gekennzeichnet, daß der innere Zapfenteil (4) zur Ausdehnung des expandierbaren Abschnitts des äußeren Zapfenteils (3) mit seinem axial äußeren Ende auf lediglich einen axial inneren und einen reduzierten Innendurchmesser aufweisenden Bereich des genannten Abschnitts einwirkt.

7. Vorrichtung nach einem der Ansprüche 1 bis 6, dadurch gekennzeichnet, daß ein zwischen den äußeren (3) und inneren (4) Zapfenteilen wirkender Schnappverbund zur lösbaren Befestigung des inneren Zapfenteils (4) in bezweckter Axiallage gegenüber dem äußeren Zapfenteil (3) vorhanden ist, dessen Form ein auf der Außenseite des inneren Zapfenteils (4) vorgesehener Ringwulst (16) ist, welcher in eine Ringnut auf der Innenseite des expandierenden Abschnitts des äußeren Zapfenteils (3) oder axiale Nut in einem Ringwulst desselben verlegt wird.

8. Vorrichtung nach einem der Ansprüche 1 bis 7, dadurch gekennzeichnet, daß der innere Zapfenteil (4) einen in den expandierbaren Abschnitt des äußeren Zapfenteils (3) aufzunehmenden, als eine axial geschlitzte Hülse ausgebildeten Schaftteil (14) und einen daran angeschlossenen, radial erweiterten Kopf (13) mit einer Auslaßöffnung (20) zur Außenatmosphäre aufweist.

9. Vorrichtung nach den Ansprüchen 7 und 8, dadurch gekennzeichnet, daß im Grenzbereich zwischen dem äußeren Zapfenteil (3) und dem Kopf (13) des inneren Zapfenteils (4) eine Ausnehmung (21) zur Aufnahme eines Werkzeuges zum Herausnehmen des inneren Zapfenteils (4) gegen den Widerstand des genannten Schnappverbandes vorgesehen ist.

**Claims**

1. An apparatus for closing a storage battery container which comprises at least one opening formed in a container cover (5), with the aid of a closing plug (2) which is provided for each opening and which is retained in a sleeve-like fitting (1) which surrounds the opening and which comprises a degassing duct to the outer atmosphere, characterized in that the closing plug (2) can be detached and refitted from the outside and comprises an essentially sleeve-shaped outer plug portion (3) and an inner plug portion (4) to be axially inserted into the latter, the outer plug portion (3) comprising a radially expansible section which is to be received in the sleeve-like fitting (1), and the inner plug portion (4) forming an expansion means which when axially inserted into the outer plug portion (3) extends the said section from a radially constricted state, in which it is axially displaceable in the associated sleeve-like fitting (1), into a radially enlarged state, in which the outer plug portion (3) is gripped in the sleeve-like fitting (1) between the said section and the side of the sleeve-like fitting (1) facing radially inwards.

2. An apparatus according to Claim 1, characterized in that the outer plug portion (3) and the inner plug portion (4) consist of a resilient material.

3. An apparatus according to Claim 1 or 2, characterized in that the sleeve-like fitting (1) on its side facing radially inwards and/or the outer plug portion (3) on the side of the said section facing radially outwards comprises engagement members (9) such as projections, combs or the like which cause the outer plug portion to be retained in the fitting (1).

4. An apparatus according to any one of Claims 1 to 3, characterized in that the outer plug portion (3) comprises a head (11, 12) which is radially enlarged as compared with its section to be received in the sleeve-like fitting (1) and which bears against the top of the container cover (5).

5. An apparatus according to any one of Claims 1 to 4, characterized in that the expansible section of the outer plug portion (3) is provided with one or more slots which extend essentially in its longitudinal direction and which start from the inner end of the plug portion.

6. An apparatus according to any one of Claims 1 to 5, characterized in that, in order to extend the expansible section of the outer plug portion (3), the inner plug portion (4) acts with its axially outer end upon only one axially inner area of the said section having a reduced diameter.

7. An apparatus according to any one of Claims 1 to 6, characterized in that a snap connection acting between the outer (3) and inner (4) plug portions for detachably securing the inner plug portion (4) in a desired axial position with respect to the outer plug portion (3) is provided, the shape of which is that of an annular bead (16) which is provided on the outside of the inner plug portion (4) and which is placed in an annular groove on the inside of the expansible section of the outer plug portion (3) or an axial groove in an annular bead thereof.

8. An apparatus according to any one of Claims 1 to 7, characterized in that the inner plug portion (4) comprises a shaft portion (14), which is to be received in the expansible section of the outer plug portion (3) and formed as an axially slotted sleeve, and a radially enlarged head (13) which is joined to the said shaft portion (14) and has an outlet opening (20) to the outer atmosphere.

9. An apparatus according to Claims 7 and 8, characterized in that in the boundary region between the outer plug portion (3) and the head (13) of the inner plug portion (4) a recess (21) is provided for receiving a tool for removing the inner plug portion (4) against the resistance of the said snap connexion.

## Revendications

1. Dispositif pour fermer un récipient ou bac d'accumulateur, dispositif qui comporte au moins un orifice ménagé dans un couvercle de bac (5), fermé à l'aide d'un tampon de fermeture (2) prévu pour chaque orifice, ce tampon étant retenu dans une monture (1) analogue à une douille entourant l'orifice et comportant un canal de dégazage vers l'atmosphère, dispositif caractérisé en ce que le tampon de fermeture (2) peut être enlevé de l'extérieur et remis en place à nouveau, et qu'il comporte essentiellement une partie externe de tampon (3) en forme de douille et une partie interne de tampon (4) pouvant être introduite axialement dans cette partie externe, la partie externe (3) du tampon comportant un segment radialement extensible pouvant être reçu dans la monture (1) analogue à une douille, tandis que la partie interne (4) du tampon constitue un organe d'expansion qui, lors de son introduction axiale dans la partie externe (3) du tampon, dilate le segment précité à partir d'un état rétréci radialement dans lequel ce segment est susceptible d'être déplacé axialement dans la monture (1) analogue à une douille, jusqu'à un état élargi radialement dans lequel la partie externe (3) du tampon est fermement maintenue dans la monture (1) par entrée en prise entre le segment précité et la face tournée vers l'intérieur de cette monture (1) analogue à une douille.

2. Dispositif selon la revendication 1, caractérisé en ce que la partie externe (3) du tampon et la partie interne (4) du tampon, sont constituées d'un matériau élastique.

3. Dispositif selon la revendication 1 ou 2, caractérisé en ce que la monture (1) analogue à une douille comporte sur sa face tournée radialement vers l'intérieur, et/ou que la partie externe (3) du tampon comporte sur la face tournée radialement vers l'extérieur du segment précité, des organes d'entrée en prise (9) tels que des saillies, des peignes, ou des organes analogues, favorisant la retenue de la partie externe du tampon dans la monture (1).

4. Dispositif selon une des revendications 1 à 3, caractérisé en ce que la partie externe (3) du tampon comporte une tête (11, 12) s'élargissant radialement par rapport au segment de cette partie externe pouvant être reçu dans la monture (1) analogue à une douille et qui s'applique sur la face supérieure du couvercle de bac (5).

5. Dispositif selon une des revendications 1 à 4, caractérisé en ce que le segment extensible de la partie externe (3) du tampon, est muni d'une ou plusieurs fentes s'étendant essentiellement en direction axiale de ce segment et partant de l'extrémité interne de cette partie du tampon.

6. Dispositif selon une des revendications 1 à 5, caractérisé en ce que la partie interne (4) du tampon agit par son extrémité axialement externe uniquement sur une zone axialement interne et ayant un diamètre interne réduit du segment précité, pour dilater ce segment extensible de la partie externe (3) du tampon.

7. Dispositif selon une des revendications 1 à 6, caractérisé en ce qu'il y a une liaison par encliquetage agissant entre la partie externe (3) et la partie interne (4) du tampon pour la fixation amovible de la partie interne (4) du tampon, dans une position axiale voulue, par rapport à la partie externe (3) du tampon, cette liaison revêtant la forme d'un boudin annulaire (16) prévu sur la face externe de la partie interne (4) du tampon et qui se place dans une gorge annulaire sur la face interne du segment extensible de la partie externe (3) du tampon, ou bien dans une gorge axiale dans un boudin annulaire de cette partie externe.

8. Dispositif selon une des revendications 1 à 7, caractérisé en ce que la partie interne (4) du tampon comporte une partie de fût (14) revêtant la forme d'une douille fendue axialement et pouvant être reçue dans le segment extensible de la partie externe (3) du tampon, ainsi qu'une tête élargie radialement (13), raccordée à ce fût et comportant un orifice d'échappement (20) vers l'atmosphère.

9. Dispositif selon les revendications 7 et 8, caractérisé en ce que dans la zone limitrophe entre la partie externe (3) du tampon et la tête (13) de la partie interne (4) du tampon, il est prévu un évidement (1) destiné à recevoir un outil pour l'extraction de la partie interne (4) du tampon en surmontant la résistance de la liaison par encliquetage précitée.

0 075 842

Fig. 1

Fig. 2